Europäisches Patentamt

**(19)** European Patent Office

Office européen des brevets

**(11)** Numéro de publication: **0 258 102**
**A2**

**(12)** # DEMANDE DE BREVET EUROPEEN

**(21)** Numéro de dépôt: **87401771.8**

**(22)** Date de dépôt: **29.07.87**

**(51)** Int. Cl.⁴: **D 03 D 11/00**
**D 03 D 25/00**

**(30)** Priorité: **01.08.86 FR 8611214**

**(43)** Date de publication de la demande:
**02.03.88 Bulletin 88/09**

**(84)** Etats contractants désignés:
**DE ES FR GB IT NL SE**

**(71)** Demandeur: **BROCHIER S.A.**
**33 Avenue Franklin Roosevelt B.P. 272**
**F-69152 Décines Charpieu Cédex (FR)**

**(72)** Inventeur: **Bompard, Bruno**
**23 rue de Montbrillant**
**F-69003 Lyon (FR)**

**Lamarie, Jean-Paul**
**3 8E rue de Margnolles**
**F-69300 Caluire (FR)**

**(74)** Mandataire: **Phélip, Bruno et al**
**c/o Cabinet Harlé & Phélip 21, rue de la Rochefoucauld**
**F-75009 Paris (FR)**

**(54) Matériau stratifié renforcé par une structure textile multidimensionnelle et son obtention.**

**(57)** Matériau stratifié ayant une section transversale du type comprenant une âme et au moins une aile latérale, par exemple une section en I, T, J, Ω et analogues, ledit matériau étant obtenu par imprégnation d'une structure textile de renforcement et durcissement de l'ensemble, ladite structure textile étant du type comportant deux nappes A, B, tissées, espacées l'une de l'autres, et une nappe de liaison C s'étendant entre ces deux nappes A, B, ledit matériau étant caractérisé en ce que ladite nappe de liaison C est constituée d'au moins une nappe de fils de chaîne de liage, emprisonnés entre les fils de trame des deux nappes tissées A.B.

FIG.2

**Description**

MATERIAU STRATIFIE RENFORCE PAR UNE STRUCTURE TEXTILE MULTIDIMENSIONNELLE ET SON OBTENTION

La présente invention a trait à de nouveaux matériaux stratifiés renforcés par une structure ou tissu multidimensionnel; elle concerne également les moyens, en particulier un métier à tisser, spécialement adaptés pour la réalisation d'une telle structure.

Les matériaux stratifiés sont connus depuis fort longtemps et sont constitués par une alternance de couches de matières textiles (tissus, non tissés..) que l'on imprègne de résine, l'ensemble étant traité thermiquement afin de provoquer la polymérisation de ladite résine et le durcissement de l'ensemble.

Ces matériaux ont trouvé de nombreuses applications soit sous la forme d'éléments plans (plaques), soit sous la forme d'éléments conformés obtenus par moulage, notamment dans le bâtiment, l'automobile, la marine, l'aéronautique...

A ce jour, la plupart des matériaux stratifiés sont obtenus par superposition d'une pluralité de couches textiles imprégnées de résine prépolymérisée. Comme matériaux textiles, on utilise soit des nappes formées de fils parallèles, soit des fils tissés. Comme matières entrant dans la composition de telles nappes, on utilise par exemples des fils de verre, graphite, bore, aramide, carbone, seuls ou en mélange.

Il a également été proposé de réaliser des éléments textiles en forme permettant d'obtenir des stratifiés ayant des sections en forme de I, J, T, $\Omega$, .... L'obtention de tels matériaux est en général réalisée en superposant un nombre approprié de nappes textiles, de préférence en les entrecroisant sur un gabarit permettant d'obtenir la forme désirée. Une telle superposition des différentes couches qui est, à ce jour, réalisée manuellement est longue et coûteuse et surtout entraîne des risques d'erreur, le manipulateur pouvant se tromper dans le nombre de couches superposées et/ou dans l'orientation des différentes couches les unes par rapport aux autres. Par suite, ces matériaux présentent des risques de délaminage et leur tenue aux chocs est parfois insuffisante.

Pour surmonter cet inconvénient, de nombreuses solutions ont été proposées pour obtenir des matériaux tissés ou non tissés ayant des formes diverses, ces matériaux étant ensuite imprégnés par une résine. De tels matériaux de forme complexe sont surtout destinés en vue de présenter de bonnes caractéristiques acoustiques et non pas de hautes performances mécaniques permettant de les utiliser comme pièces de structure.

Ainsi, par exemple, le brevet des Etats-Unis d'Amérique No 3,481,427 décrit un tissu tridimensionnel à base de fils de verre, qui après imprégnation avec une résine et polymérisation, donne un panneau rigide poreux présentant de très bonnes propriétés acoustiques. Selon ce document, il est possible de tisser en une seule opération un matériau de type "sandwich", dont une face est poreuse, l'autre face étant continue, ces deux faces étant reliées entre elles par des cannelures. Un tel matériau tissé n'est pas destiné à présenter une grande résistance mais a surtout pour fonction d'obtenir une bonne absorption des sons.

Le brevet des Etats Unis d'Amérique No 3.700.067 décrit également un tissu poreux tridimensionnel permettant aussi d'avoir une bonne absorption des sons.

Le brevet US 3 670 504 décrit une structure textile dans laquelle peut être coulée du béton ou qui peut servir pour des travaux sous-marins (par exemple la structure peut être remplie de sable et autres matériaux naturels). Ladite structure comporte deux nappes tissées espacées l'une de l'autre à travers lesquelles passent des fils qui sont entrelacés dans les nappes. Ces fils sont avantageusement disposés en rangées parallèles pour conférer de la résistance à la structure et retenir les matériaux précités. Les matières textiles constitutives d'une telle structure sont choisies pour résister à l'eau et sont notamment le polypropylène ou le "Nylon". La structure textile décrite dans le brevet US 3 670 504 est un tissu poreux tridimensionnel qui est bien adapté aux applications prévues dans ce brevet, mais ne conviendrait pas pour la fabrication de matériaux stratifiés à haute résistance mécanique.

Le brevet US 2 206 698 a pour objet des stores qui sont constitués de deux rubans tissés, reliés par des sortes d'entretoises qui passent, à la manière d'une chaîne, à travers les trames desdits rubans. Un tel article ne peut être comparé à une structure tridimensionnelle destinée au renforcement de matériaux stratifiés.

Il a également été proposé, dans le brevet français No 2 319 727, de réaliser des tissus tridimensionnels permettant d'obtenir des stratifiés présentant une résistance mécanique élevée ainsi qu'une bonne résistance aux chocs et à l'abrasion. Cependant, la technique décrite dans ce document permet essentiellement d'obtenir des blocs pouvant certes avoir des formes quelconques, mais ne conduit pas à des éléments textiles tridimensionnels pouvant être réalisés en continu sur un métier à tisser conventionnel.

Comme indiqué dans le préambule du brevet français No 2 315 562, on a également proposé de réaliser des tissus épais, tridimensionnels, à partir d'une étoffe bidirectionnelle obtenue par un procédé de tissage classique et comportant des fils de chaîne et des fils de trame, et d'enchevêtrer à ce tissu ainsi formé, selon une direction différente des directions en chaîne et en trame, une troisième série de fils et ce, avec un appareil de tissage ou métier convenablement adapté.

Dans un tel mode de réalisation, compte-tenu du fait que les fils de chaîne et de trame sont entrecroisés, il est pratiquement impossible d'utiliser des fibres fragiles, telles que des fibres de carbone ou de graphite.

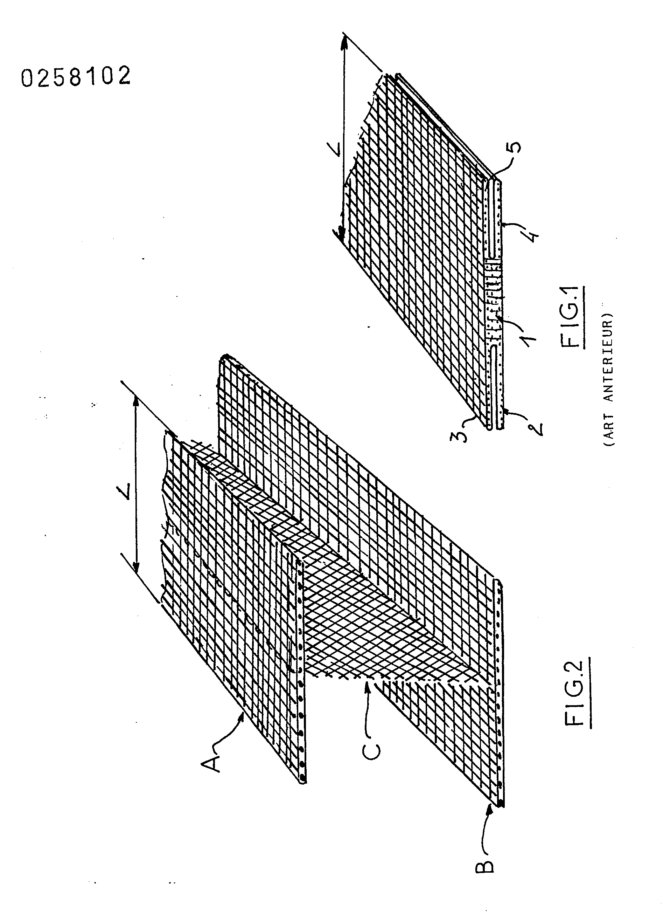

Récemment, dans le FR-A-2 497 839, il a été proposé une solution permettant de réaliser directement sur un métier à tisser des éléments en forme, de grande longueur, présentant par exemple une section transversale en I, T, J, .... Un tel tissu a une structure du type illustré par la figure 1 annexée et se compose, lorsque l'on souhaite par exemple réaliser un matériau en forme de I, d'une zone centrale (1) subdivisée, sur chacun de ses côtés, en deux nappes élémentaires (2, 3, 4, 5). Le liage des nappes de fils de chaîne et de trames constituant la partie centrale (1) est obtenu par des fils de chaîne de liage s'étendant sur toute l'épaisseur du matériau, alors que le liage des nappes élémentaires (2, 3, 4 et 5) est obtenu, de la même manière, par des chaînes de liage additionnelles. Lors de sa réalisation sur le métier, ce matériau se présente de la manière illustrée à la figure 1 et, lors de sa mise en forme de I, on rabat les parties élémentaires (2, 3, 4, 5) latéralement, la partie centrale (1) formant donc la branche du I.

On conçoit, que dans un tel type de réalisation, la partie centrale (1) est au moins deux fois plus épaisse que les parties latérales (2, 3, 4, 5) et que, par ailleurs, pour une largeur (L) de tissage, les largeurs relatives de la partie centrale (1) et des parties latérales (2, 3, 4, 5) sont certes ajustables les unes par rapport aux autres selon le besoin, mais la somme de ces largeurs correspondra toujours à la largeur de tissage.

Dans le cadre de leur utilisation finale, ces éléments doivent par ailleurs être renforcés, essentiellement dans la partie centrale, par des tissus du type biais afin de leur conférer des propriétés de tenue en torsion.

Or on a trouvé, et c'est ce qui fait l'objet de la présente invention, qu'il était possible d'obtenir un matériau stratifié de haute résistance mécanique, ayant une section transversale du type comprenant une âme et au moins une aile latérale, par exemple une section en I, T, J, $\Omega$ et analogues, ledit matériau étant obtenu par imprégnation d'une structure textile de renforcement et durcissement de l'ensemble, ladite structure textile étant du type comportant deux nappes A, B tissées, espacées l'une de l'autre, et une nappe de liaison C s'étendant entre ces deux nappes A, B, ledit matériau étant caractérisé en ce que ladite nappe de liaison C est constituée d'au moins une nappe de fils de chaîne de liage, emprisonnés entre les fils de trame des deux nappes tissées A, B.

Les fils de la nappe de chaîne de liage peuvent être disposés soit orthogonalement par rapport aux nappes tissées, soit être de préférence inclinés par rapport à celles-ci, soit être disposés à la fois orthogonalement et de manière inclinée.

Les fils de chaîne et les fils de trame constituant les deux tissus ainsi que les fils de nappe de chaîne de liage, peuvent être à base de la même matière, ou de matières textiles différentes.

Les fils et fibres textiles sont choisis parmi les fils et fibres techniques couramment utilisés dans les stratifiés et possédant de hautes résistances mécaniques et/ou au feu, par exemple verre, graphite, carbone, aramide, bore, seuls ou en mélange.

Il est également possible d'utiliser des fibres et fils de natures différentes, par exemple des mélanges de filaments à haute résistance mécanique, tels que les fils de carbone, avec des filaments thermoplastiques à haute température, tels que les filaments de polyarylène sulfure, par exemple de polyphénylènesulfure.

Egalement, on peut mettre en oeuvre au moins en partie des fils constitués d'une âme à haute résistance mécanique, imprégnée ou revêtue d'une résine thermoplastique. Ces fils sont, par exemple à base de carbone ou d'aramide. Le revêtement est notamment en polyamide.

Il peut donc être avantageux que les fils et fibres de la structure textile contiennent des résines ou des polymères en une quantité suffisante pour la fabrication de l'article stratifié final. Ainsi, les fils ou fibres peuvent être imprégnés, avant la préparation du matériau composite, avec des résines capables de réagir à froid ou à chaud, telles que des résines époxy, des résines de bis-maléimide, des résines phénoliques et autres résines analogues. Ainsi qu'on l'a indiqué précédemment, les fils et fibres mis en oeuvre lors du tissage peuvent comprendre des mélanges de filaments les uns ayant des caractéristiques techniques et les autres, en quantité suffisante, ayant des propriétés thermo-plastiques à haute température.

On voit donc que la technique de fabrication des matériaux stratifiés selon l'invention peut être différente, selon la nature des fils et fibres utilisés. Dans certains cas, on peut utiliser la technique usuelle de fabrication qui consiste à tisser d'abord la structure, puis à l'imprégner de résine et enfin à mettre en forme l'article final, en particulier par chauffage sous pression ou sous vide.

Mais on peut aussi préparer directement une structure convenant à la mise en forme finale en prévoyant que les fils ou fibres utilisés pour le tissage comportent déjà la quantité de polymère nécessaire pour la mise en forme finale, cet apport de polymère pouvant être réalisé par un mélange avec des fils thermoplastiques ou par imprégnation des fibres techniques. Dans de tels cas, la structure textile peut être directement convertie en éléments structuraux de haute résistance mécanique, en particulier, par chauffage sous pression ou sous vide.

On notera aussi que, selon une variante, il est possible de renforcer la structure textile, en particulier la nappe de liage, en insérant dans celle-ci des fils de renfort, en particulier des fils thermo-fusibles, ce qui permet de donner une stabilité dimensionnelle et une tenue mécanique satisfaisantes à la structure textile avant imprégnation de résine et transformation en stratifié, les fils thermo-fusibles pouvant alors s'éliminer lors du chauffage.

Un tissu multidimensionnel, tel qu'utilisé dans les stratifiés selon l'invention, peut comporter une ou plusieurs nappes de fils de chaîne de liage, et, dans le cas où il y a plusieurs nappes, elles peuvent être espacées les unes des autres, de manière à former des canaux longitudinaux ou si elles sont accolées, former une partie centrale plus épaisse.

Selon une variante, il est possible d'avoir une nappe de fils de chaîne de liage se présentant sous la forme de bandes espacées les unes des autres dans la longueur du tissage.

Bien entendu, les tissus externes peuvent être soit de même largeur, soit avoir des largeurs différentes.

Une telle structure multidimensionnelle présente comme avantage non seulement de pouvoir être fabriquée directement sur le métier, dans toute la largeur (L) de celui-ci, mais également de pouvoir faire varier à volonté l'inclinaison des fils de chaîne de liage.

Après tissage, une telle structure peut notamment être coupée à la longueur désirée, éventuellement associée à d'autres éléments de renfort et imprégnée avec une résine conventionnelle, par exemple une résine époxy.

Pour obtenir la structure textile mise en oeuvre pour le renforcement de matériaux stratifiés, on tisse de manière connue en soi les deux nappes et on les dispose en relation espacée l'une de l'autre en correspondance avec la forme de l'article désiré, les deux nappes espacées étant liées par au moins une nappe additionnelle qu'on réalise en faisant passer un ensemble de fils de chaîne entre les fils de trame desdites nappes espacées.

On peut à cet effet utiliser un métier qui fait également partie de l'invention, métier qui se caractérise par le fait :

- que le peigne qu'il comporte est animé d'un mouvement parallèle au plan normal des fils de chaîne;

- qu'en aval du peigne, est disposé un gabarit, dont la forme correspond à la forme du tissu à réaliser (T, H...), ce gabarit comportant des moyens d'avance des nappes de tissus espacés.

L'invention et les avantages qu'elle apporte seront encore illustrés par les exemples de réalisation donnés ci-après à titre indicatif mais non limitatif, et qui sont illustrés par les dessins annexés dans lesquels:

- la figure 1 illustre comme vu précédemment, un tissu tridimensionnel réalisé conformément aux enseignements de l'art antérieur (FR-A-2 497 839);

- la figure 2 est une vue en perspective montrant la structure d'un article textile multidimensionnel tissé conforme à l'invention;

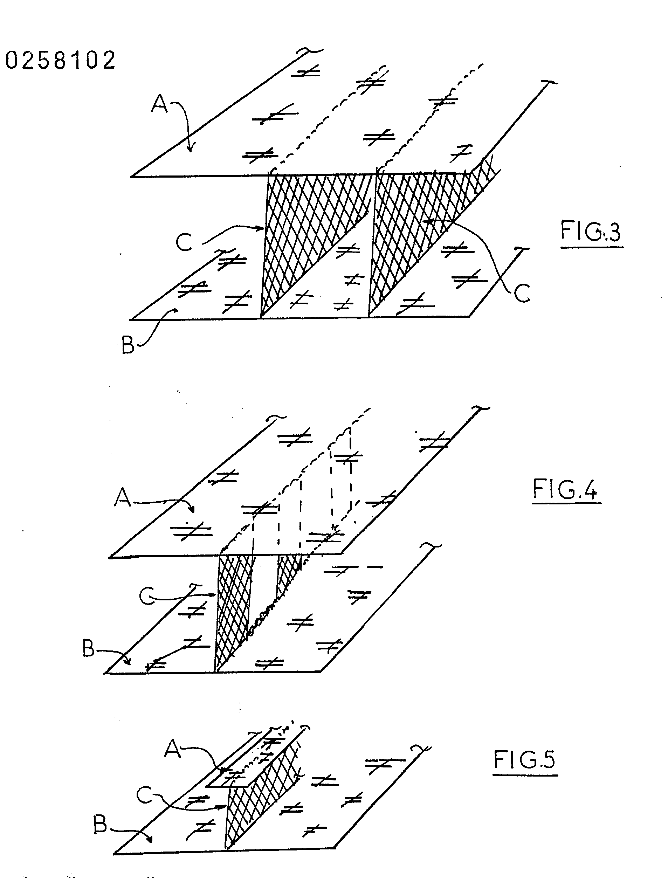

- les figures 3, 4, 5, 6 et 7 sont également des vues en perspective montrant différentes variantes de structures d'un article textile multidimensionnel tissé conforme à l'invention;

- la figure 8 est une vue de détail, illustrant la structure d'un tissu multidimensionnel en forme de I réalisé conformément à l'invention,

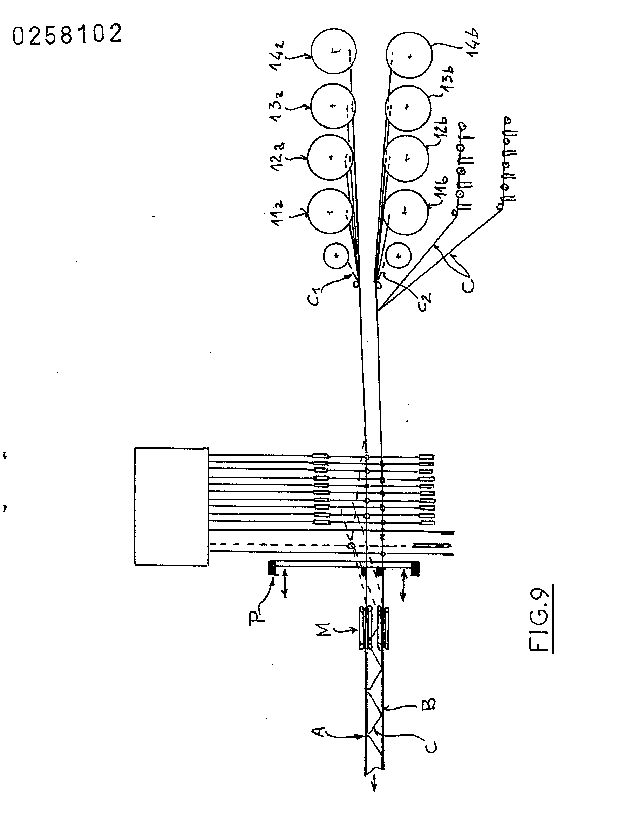

- la figure 9 est une vue schématique d'un métier à tisser permettant de réaliser des tissus selon l'invention.

Dans la suite de la description, les mêmes références seront utilisées pour désigner les mêmes éléments, éventuellement en les affectant d'un indice.

Si l'on se reporte à la figure 2, la structure textile tissée multidimensionnelle telle qu'elle est utilisée conformément à l'invention pour la fabrication de matériaux stratifiés est constituée essentiellement de deux tissus A, B, bidirectionnels, de préférence multicouches, espacés l'un de l'autre et d'une partie de liaison C.

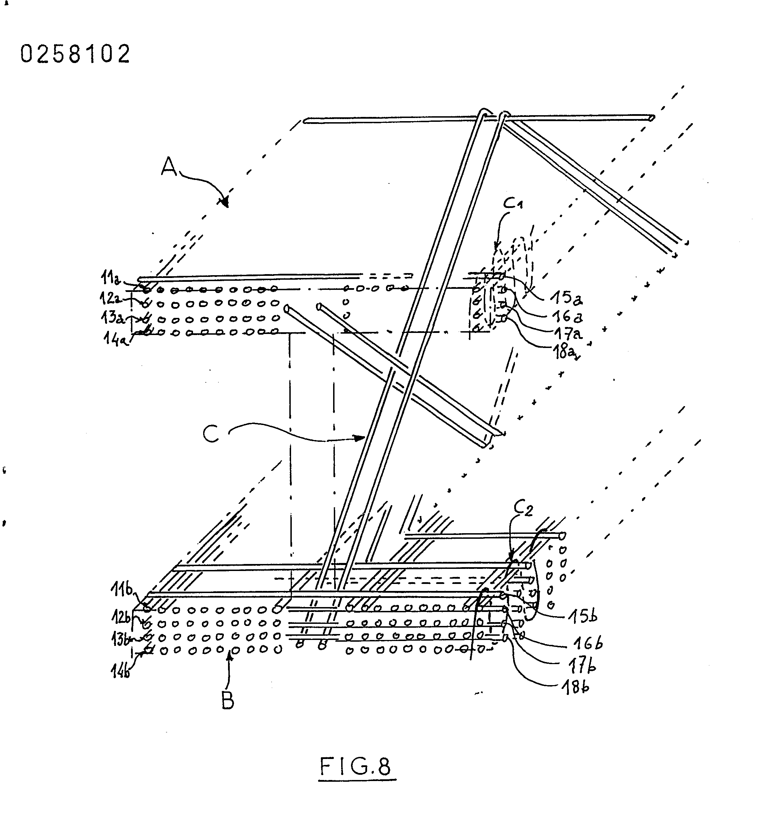

Les tissus A, B sont de préférence réalisés d'une manière similaire aux enseignements du FR-A-2 497 839 et sont formés, ainsi que cela ressort de la vue de détail illustrée par la figure 8, à partir de nappes de fils de chaîne (11a, 12a, 13a, 14a), (11b, 12b, 13b, 14b) et des nappes de fils de trame (15a, 16a, 17a, 18a), (15b, 16b, 17b, 18b) superposées dans des plans parallèles, ces fils n'étant pas entrecroisés entre eux et la nappe supérieure ainsi que la nappe inférieure de cet empilement étant constituées de nappes de trame, la troisième direction étant formée par des fils de chaîne de liage (C1, C2) qui traversent l'empilement des nappes précitées, ces fils de liage contournant par ailleurs les fils de trame de manière à former avec ceux-ci un tissu conventionnel emprisonnant les nappes de chaîne et de trame internes.

Selon une caractéristique de l'invention, la liaison entre les deux tissus A, B est obtenue au moyen d'une série de fils de chaîne de liage additionnels C qui viennent alternativement lier avec les tissus A, B, l'armure de la chaîne de liage étant déterminée en fonction de l'inclinaison que l'on souhaite donner aux fils dans la paroi C ainsi formée.

Un tel matériau est réalisé sur un métier à tisser conventionnel adapté, d'une part pour permettre de réaliser les deux nappes tissées A, B d'une manière bien séparée l'une de l'autre et, d'autre part pour assurer un maintien du tissu formé après réalisation. La fabrication des deux tissus externes A, B est réalisée d'une manière similaire au FR-A-2 497 839 (page 6, lignes 5 à 18), et ne sera donc pas décrite en détail par mesure de simplification. En revanche, afin d'obtenir une paroi de liaison C de grande hauteur, on utilise une chaîne de liage C alimentée à partir d'une cantre à bobines individuelles, la commande de ces fils de chaîne étant obtenue de préférence par la même mécanique commandant les fils de chaîne des deux tissus A, B. Les adaptations permettant de réaliser un tissu conforme à l'invention portent, d'une part, sur le peigne P qui est animé d'un déplacement parallèle au plan de formation des tissus A, B et, d'autre part, en prévoyant, en aval du peigne, un dispositif M de maintien du tissu qui assure le guidage et l'avance des nappes supérieure A et inférieure B.

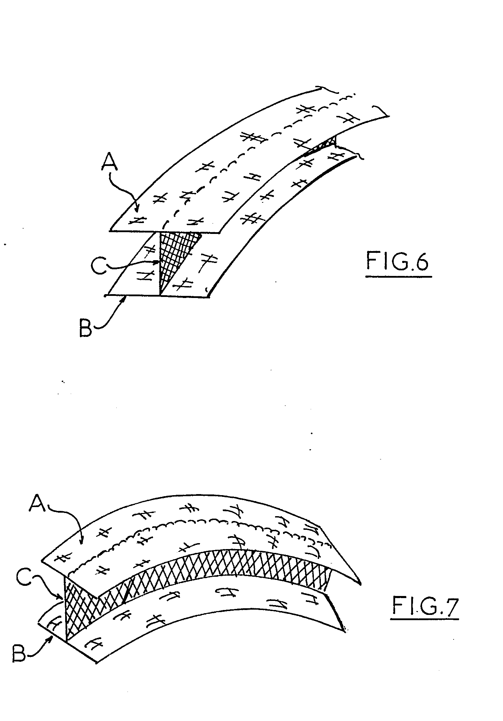

Par ailleurs, grâce à l'invention, il est également possible, ainsi que cela ressort des figures 6 et 7, d'obtenir une structure textile qui non seulement présente une section en forme de I, T, J..., mais également n'est pas rectiligne et présente un rayon de courbure obtenu en jouant sur les débits de fils de chaîne.

Par rapport aux solutions antérieures et notamment au regard du FR-A-2 497 839, l'invention apporte de très nombreux avantages, parmi lesquels on peut citer :

- la possibilité d'obtenir un matériau en forme de H, de I, de T, de grandes dimensions, puisque l'on peut réaliser la forme souhaitée directement sur toute la largeur du métier, ce matériau pouvant également avoir une très grande épaisseur;

- le fait qu'il est possible d'avoir de très bonnes caractéristiques mécaniques, tout en ayant une masse de fils dans la partie centrale réduite, étant donné que dans cette zone, les fils de liaison peuvent être inclinés à volonté;

- par ailleurs, les articles finis ne présentent aucun risque de délaminage compte tenu de la liaison entre les différentes couches et offrent une très grande résistance aux chocs;

- enfin, de par sa conception, il est possible de réaliser des structures comportant des mélanges de fibres, choisies en fonction des caractéristiques que l'on souhaite donner à telle ou telle partie du matériau, ainsi comme dit précédemment, d'avoir une grande souplesse concernant les épaisseurs, largeurs... dans les différentes parties de la structure.

## Revendications

1. Matériau stratifié ayant une section transversale du type comprenant une âme et au moins une aile latérale, par exemple une section en I, T, J, Ω et analogues, ledit matériau étant obtenu par imprégnation d'une structure textile de renforcement et durcissement de l'ensemble, ladite structure textile étant du type comportant deux nappes A, B, tissées, espacées l'une de l'autre, et une nappe de liaison C s'étendant entre ces deux nappes A, B, ledit matériau étant caractérisé en ce que ladite nappe de liaison C est constituée d'au moins une nappe de fils de chaîne de liage, emprisonnés entre les fils de trame des deux nappes tissées A, B.

2. Matériau stratifié selon la revendication 1, caractérisé par le fait que les fils de la nappe de chaîne de liage C sont disposés orthogonalement par rapport aux tissus externes A, B.

3. Matériau stratifié selon la revendication 1, caractérisé par le fait que les fils de la nappe de chaîne de liage C sont inclinés par rapport aux tissus externes A, B.

4. Matériau stratifié selon la revendication 1, caractérisé par le fait que les fils de la nappe de chaîne de liage C sont disposés, pour partie, orthogonalement par rapport aux tissus externes A, B, et, pour le restant inclinés par rapport à ces tissus externes A, B.

5. Matériau stratifié selon l'une quelconque des revendications 1 à 4, caractérisé en ce que les fils et fibres constituant les tissus A, B ainsi que la nappe de liage C sont des fils et fibres techniques couramment utilisés dans les stratifiés et possédant de hautes résistances mécaniques et/ou au feu, par exemple en verre, graphite, carbone, aramide, bore, seuls ou en mélange.

6. Matériau stratifié selon l'une quelconque des revendications 1 à 4, caractérisé par le fait que les fils de chaîne et les fils de trame constituant les tissus A, B ainsi que les fils de la nappe de chaîne de liage C, sont à base de la même matière.

7. Matériau stratifié selon l'une quelconque des revendications 1 à 5, caractérisé en ce que les fibres ou fils des tissus A, B et de la nappe de liage C sont de nature différente.

8. Matériau stratifié selon la revendication 7, caractérisé en ce que les tissus A, B et/ou la nappe de liage C comprennent des mélanges de filaments à hautes résistances mécaniques et/ou au feu tels que des fils de carbone, et de filaments thermo-plastiques à haute température, tels que les filaments de polyarylène sulfure, par exemple de polyphénylènesulfure.

9. Matériau stratifié selon l'une quelconque des revendications 1 à 8, caractérisé en ce que les fils constituant les tissus A, B et/ou la nappe de liage C sont au moins en partie des fils constitués d'une âme à haute résistance mécanique imprégnée ou revêtue d'une résine thermo-plastique.

10. Matériau stratifié selon la revendication 9, caractérisé en ce que les fils sont à base de carbone ou d'aramide.

11. Matériau stratifié selon l'une quelconque des revendications 9 ou 10, caractérisé en ce que les fils sont imprégnés ou revêtus d'aramide.

12. Matériau stratifié selon l'une quelconque des revendications 1 à 11, caractérisé en ce que les fils et fibres de la structure textile contiennent des résines ou des polymères en quantité suffisante pour la fabrication dudit stratifié.

13. Matériau stratifié selon la revendication 12, caractérisé en ce que les fils ou fibres sont imprégnés, avant la préparation du matériau stratifié, avec des résines capables de réagir à froid ou à chaud, telles que des résines époxy, des résines de bis-maleimide, des résines phénoliques et autres résines analogues.

14. Matériau stratifié selon l'une quelconque des revendications 1 à 13 caractérisé en ce que la structure textile comprend des fils de renfort, en particulier dans la nappe de liaison C, lesdits fils de renfort étant avantageusement thermo-fusibles pour pouvoir être éliminés lors de la transformation finale en matériau stratifié.

15. Procédé pour l'obtention d'un matériau stratifié selon l'une quelconque des revendications 1 à 14, caractérisé en ce qu'on tisse d'abord la structure textile, en tissant d'une manière connue en soi les tissus A, B, qu'on dispose ceux-ci en relation espacée l'un de l'autre en correspondance avec la forme de l'article, en ce qu'on lie les tissus espacés A, B par au moins une nappe additionnelle C qu'on réalise en faisant passer un ensemble de fils de chaîne entre les fils de trame des tissus espacés, en ce qu'on imprègne de résine ou de polymère la structure textile ainsi obtenue et en ce qu'on met en forme l'article final, en particulier par chauffage sous pression ou sous vide.

16. Procédé pour l'obtention d'un matériau stratifié selon l'une quelconque des revendications 1 à 14, caractérisé en ce qu'on tisse la structure textile en utilisant des fils comportant déjà la quantité de polymère ou de résine nécessaire pour la mise en forme finale et en ce qu'on convertit directement la structure textile ainsi obtenue en éléments structuraux de haute résistance mécanique, en particulier par chauffage sous pression ou sous vide.

17. Procédé selon la revendication 15, caractérisé en ce que lors du tissage de la structure textile on utilise un mélange de fils ou fibres techniques et de fils thermo-plastiques.

18. Procédé selon la revendication 15, caracté risé en ce que lors du tissage de la structure textile on utilise des fils revêtus ou imprégnés d'une matière thermo-plastique.

19. Métier à tisser pour la mise en oeuvre du procédé selon l'une quelconque des revendications 15 à 18, caractérisé en ce que :
- le peigne P qu'il comporte est animé d'un mouvement parallèle au plan normal des fils de chaîne;
- en aval du peigne P, est disposé un gabarit M dont la forme correspond à la forme du tissu à réaliser, ce gabarit comportant des moyens d'avance des tissus espacés A,B.

0258102

FIG.1

(ART ANTERIEUR)

FIG.2

0258102

FIG.3

FIG.4

FIG.5

0258102

FIG.6

FIG.7

0258102

FIG.8

FIG.9